# EUROPEAN PATENT SPECIFICATION

(11) **EP 3 967 722 B1**
(45) Date of publication and mention of the grant of the patent: **01.03.2023**
(21) Application number: 20827648.5
(22) Date of filing: 10.04.2020
(51) Int. Cl.: C08K 5/09, C08K 5/13, C08L 59/00, C08L 83/04, C08K 3/26, F16C 33/20, C08L 59/04

(54) **POLYACETAL RESIN COMPOSITION AND SLIDING MEMBER**
POLYACETALHARZZUSAMMENSETZUNG UND GLEITELEMENT
COMPOSITION DE RÉSINE DE POLYACÉTAL ET ÉLÉMENT COULISSANT

(30) Priority: 21.06.2019 JP 2019115383
(43) Date of publication of application: 16.03.2022
(73) Proprietor: Polyplastics Co., Ltd., Tokyo 108-8280 (JP)
(72) Inventor: HATTORI, Kazuyuki, Fuji-shi, Shizuoka 416-8533 (JP); MONMA, Tomohiro, Fuji-shi, Shizuoka 416-8533 (JP)
(74) Representative: Maiwald GmbH
(86) International application number: PCT/JP2020/016076
(87) International publication number: WO 2020/255544

(56) References cited:
- WO-A1-2016/151946
- JP-A- 2013 124 364

## Description

### TECHNICAL FIELD

The present invention relates to a polyacetal resin composition and a sliding member.

### BACKGROUND ART

A polyacetal resin (referred to as a polyoxymethylene resin which is abbreviated as a POM resin) has been widely used in fields of automobile, electrical and electronic products, and the like due to its well-balanced mechanical properties, and excellent friction and wear resistance, chemical resistance, heat resistance, electrical property and the like.

However, characteristics required in such fields are becoming increasingly sophisticated. As an example, there is a strong demand to improve basic sliding properties represented by a coefficient of friction and a wear amount while maintaining an excellent surface smoothness that the polyacetal resin has.

In order to meet these requirements, a method in which a fluororesin or a polyolefin resin is added to the polyacetal resin has been known. However, the fluororesin and the polyolefin resin have poor compatibility with the polyacetal resin. Therefore, these resins may separate from the polyacetal resin, potentially causing delamination on a surface of a molded article or generating a deposit on a mold upon molding the molded article.

A method in which a lubricating oil such as a fatty acid, a fatty acid ester, a silicone oil, and various mineral oils is added to the polyacetal resin has also been known. However, upon molding the molded article, the lubricating oil tends to easily separate from the polyacetal resin to exude. Thusexuded lubricating oil may impair extrusion processability or molding processability. Furthermore, when the lubricating oil exudes on the surface of the molded article, the appearance of the molded article may deteriorate.

In order to solve these problems, a polyacetal resin composition in which a polyethylene wax, a polyethylene resin, and a silicone oil having a specific dynamic viscosity are added to and incorporated into the polyacetal resin has been proposed (see e.g., Patent Document 1). WO 2016/151946 discloses a polyacetal resin composition comprising 100 parts by weight of a polyacetal resin (A), 0.01 parts by weight to 1 part by weight of a hindered phenolic antioxidant (B), 0.01 parts by weight to 1 part by weight of a nitrogenous compound (C), 0.1 part by weight to 1 part by weight of a graft copolymer (D), 0.1 part by weight to 1 part by weight of a fatty acid ester (E), 0.5 parts by weight to 5 parts by weight of a silicone oil (F), and 0.1 parts by weight to 1 part by weight of calcium carbonate (G), wherein the nitrogenous compound (C) is at least one selected from the group consisting of an aminotriazine compound, a guanamine compound, a hydrazide compound, and a polyamide compound, the graft copolymer (D) has an olefin-based polymer (d1) as a main chain, and comprises a vinyl-based polymer (d2) as a side chain, the fatty acid ester (E) is constituted from a fatty acid with a carbon number of 12 to 32, and a monohydric or polyhydric alcohol with a carbon number of 2 to 30, and the calcium carbonate (G) has an average particle diameter of 1 µm or less. This composition is used for making sliding members.

Patent Document 1: Japanese Unexamined Patent Application, Publication No. 2008-19430

### DISCLOSURE OF THE INVENTION

### Problems to be Solved by the Invention

However, even with the polyacetal resin composition described in Patent Document 1, there is still room for further improvement in terms of deterioration in the appearance of the molded article such as exudation of the lubricating oil and delamination on a surface of a molded piece, and a mold deposit upon molding.

An object of the present invention is to provide a polyacetal resin composition having excellent friction and wear properties while maintaining the appearance of the molded article and low mold contamination upon molding; and a sliding member.

### Means for Solving the Problems

The present inventors conducted extensive studies to achieve the above object and found that the above object can be achieved by using a polyacetal resin as a base substance and certainly adding and incorporating a hindered phenol antioxidant, a silicone oil, non-surface treated precipitated calcium carbonate having a specific particle diameter, and a specific fatty acid into the polyacetal resin in specific amounts. Thus, the present invention has been completed.

A first aspect of the present invention relates to a polyacetal resin composition including at least:
100 parts by mass of (A) a polyacetal resin;
0.01 parts by mass or more and 1 part by mass or less of (B) a hindered phenol antioxidant;
0.3 parts by mass or more and 5 parts by mass or less of (C) a silicone oil;
0.1 parts by mass or more and 1.0 parts by mass or less of (D) calcium carbonate; and
0.02 parts by mass or more and 0.2 parts by mass or less of (E) a fatty acid,

the (D) calcium carbonate being non-surface treated precipitated calcium carbonate having an average particle diameter of 1 um or less, and
the (E) fatty acid being a fatty acid having 12 or more and 30 or less carbon atoms. A second aspect of the present invention relates to a sliding member including the polyacetal resin composition according to the first aspect.

### Effects of the Invention

The present invention can provide a polyacetal resin composition having excellent friction and wear properties and good performance regarding appearance of a molded article or mold contamination upon molding.

### PREFERRED MODE FOR CARRYING OUT THE INVENTION

Although specific embodiments of the present invention will be described hereafter in detail, the present invention is not limited to the embodiments below in any way and can be implemented with modifications as appropriate within the scope of the object of the present invention.

### <Polyacetal resin composition>

A polyacetal resin composition according to an embodiment of the present invention includes at least (A) a polyacetal resin, (B) a hindered phenol antioxidant, (C) a silicone oil, (D) precipitated calcium carbonate, and (E) a fatty acid.

### <<(A) Polyacetal resin>>

Any of a polyacetal homopolymer and a polyacetal copolymer of which main chain is largely comprised of an oxymethylene chain may be used as the (A)polyacetal resin. Polyacetal which has been modified by cross-linking or graftcopolymerization with a known method may also be used as a base resin and, for example, a degree of polymerization thereof is not particularly limited as long as the polyacetal is moldable.

### <<(B) Hindered phenol antioxidant>>

The (B) hindered phenol antioxidant which can be used in an embodiment of the present invention is not particularly limited. Examples thereof include a monocyclic hindered phenol compound (e.g., 2,6-di-t-butyl-p-cresol), a polycyclic hindered phenol compound linked through a hydrocarbon group or a sulfur-containing group (e.g., 2,2'-methylelebis(4-methyl-6-t-buthylphenol), 4,4'-methylelebis(2,6-di-t-buthylphenol), 1,1,3-tris(2-methyl-4-hydroxy-5-t-buthylphenyl)butane, 4,4'-butylidenebis(3-methyl-6-t-buthylphenol), 1,3,5-trimethyl-2,4,6-tris(3,5-di-t-butyl-4-hydroxybenzyl)benzene, 4,4'-thiobis(3-methyl-6-t-buthylphenol)), a hindered phenol compound having an ester group or an amide group (e.g., n-octadecyl-3-(4'-hydroxy-3',5'-di-t-buthylphenyl)propionate, n-octadecyl-2-(4'-hydroxy-3',5'-di-t-buthylphenyl)propionate, 1,6-hexanediol-bis[3-(3,5-di-t-butyl-4-hydroxyphenyl)propionate], triethylene glycol-bis[3-(3-t-butyl-5-methyl-4-hydroxyphenyl)propionate], pentaerythritol tetrakis[3-(3,5-di-t-butyl-4-hydroxyphenyl)propionate], 3,9-bis{2-[3-(3-t-butyl-4-hydroxy-5-methylphenyl)propionyloxy]-1,1-dimethylethyl}-2,4,8,10-tetraoxaspiro[5.5]undecane, 2-t-butyl-6-(3'-t-butyl-5'-methyl-2'-hydroxybenzyl)-4-methylphenylacrylate, 2-[1-(2-hydroxy-3,5-di-t-pentylphenyl)ethyl]-4,6-di-t-pentylphenylacrylate, di-n-octadecyl-3,5-di-t-butyl-4-hydroxybenzylphosphonate, N,N'-hexamethylelebis(3,5-di-t-butyl-4-hydroxy-dihydrocinnamamide), N,N'-ethylenebis[3-(3,5-di-t-butyl-4-hydroxyphenyl)propionamide], N,N'-tetramethylelebis[3-(3,5-dit-butyl-4-hydroxyphenyl)propionamide], N,N'-hexamethylelebis[3-(3,5-di-t-butyl-4-hydroxyphenyl)propionamide], N,N'-ethylenebis[3-(3-t-butyl-5-methyl-4-hydroxyphenyl)propionamide], N,N'-hexamethylelebis[3-(3-t-butyl-5-methyl-4-hydroxyphenyl)propionamide], N,N'-bis[3-(3,5-di-t-butyl-4-hydroxyphenyl)propionyl]hydrazine, N,N'-bis[3-(3-t-butyl-5-methyl-4-hydroxyphenyl)propionyl]hydrazine, 1,3,5-tris(3,5-di-t-butyl-4-hydroxybenzyl)isocyanurate, and 1,3,5-tris(4-t-butyl-3-hydroxy-2,6-dimethylbenzyl)isocyanurate.

At least one or two or more selected from the above-mentioned antioxidants may be used in an embodiment of the present invention.

In an embodiment of the present invention, the (B) hindered phenol antioxidant is contained in an amount of 0.01 parts by mass or more and 1 part by mass or less and preferably 0.02 parts by mass or more and 0.5 parts by mass or less relative to 100 parts by mass of the (A) polyacetal resin.

The (B) antioxidant incorporated in an amount smaller than the above range is not preferred since it does not exert a sufficient anti-oxidizing property and the (A) polyacetal resin tends to have insufficient stability against short-term oxidation degradation at a high temperature during a molding process or oxidation degradation in long-term use at room temperature. When the (A) polyacetal resin component degrades due to its insufficient stability, a sliding property is also undesirably affected. On the other hand, when the (B) antioxidant is incorporated in an amount larger than the above range, a mechanical property of a resultant resin composition may be impaired.

### <<(C) Silicone oil>>

A type of the (C) silicone oil is not particularly limited, but known examples thereof include polydimethylsiloxane and polymethylphenylsiloxane represented by the structure shown in Formula (1) below:

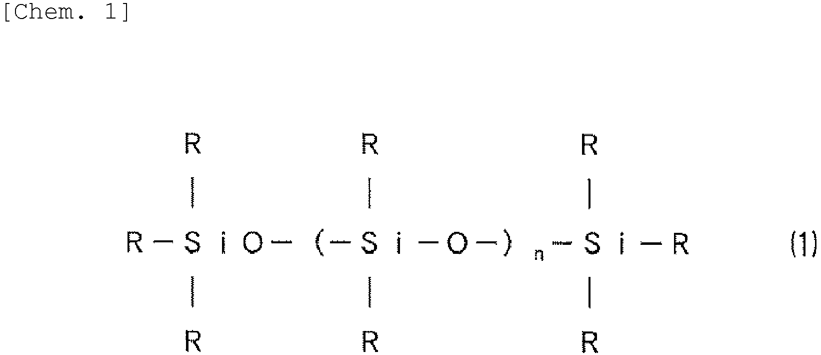

In Formula (1), Rs are basically methyl groups, but some of them may be an alkyl group, a phenyl group, a halogenated alkyl group, a halogenated phenyl group, or the like.

In an embodiment of the present invention, a mixture of two or more types of silicone oils having different structures or viscosities may be used. A thickening agent, a solvent, and the like may be added to the silicone oil for viscosity control.

In an embodiment of the present invention, the (C) silicone oil is incorporated in an amount of 0.3 parts by mass or more and 5 parts by mass or less relative to 100 parts by mass of the (A) polyacetal resin. The (C) silicone oil incorporated in an amount smaller than the above range is not preferred since the object of an embodiment of the present invention, i.e., improvement of the friction and wear properties may be insufficiently achieved. On the other hand, the (C) silicone oil incorporated in an amount larger than the above range is not preferred due to the possibility of mold contamination upon molding, the possibility of delamination on a surface of a molded article for a sliding member, and an increased wear amount of the material itself upon sliding.

### <<(D) Precipitated calcium carbonate>>

The polyacetal resin composition according to an embodiment of the present invention includes the (D) precipitated calcium carbonate. It has been known that an inorganic powder is incorporated into the polyacetal resin in order to improve surface hardness and cutting processability. Known examples of the inorganic powder include calcium carbonate, magnesium carbonate, talc, silica, clay, kaolin, diatomaceous earth, perlite, bentonite, feldspar, carbon, and white carbon. In an embodiment of the present invention, the precipitated calcium carbonate is employed as the inorganic powder considering a sliding property on a counterpart material when used as the sliding member and hardness.

The (D) precipitated calcium carbonate is not particularly limited, as long as it is produced with chemical synthesis. For example, the (D) precipitated calcium carbonate may be in the form of particles. One type of the (D) precipitated calcium carbonate may be used alone or two or more types thereof may be used in combination.

An average particle diameter of the (D) precipitated calcium carbonate is 1 um or less, preferably 500 nm or less, and more preferably 200 nm or less. The average particle diameter which is excessively large is not preferred since a molded article having an uneven surface is produced and a counterpart material on which the molded article slides may be damaged due to increased surface roughness.

Note that, the particle diameter, as used herein, refers to an arithmetic mean of a major axis and a minor axis of a particle of interest when observed at a magnification of 30,000 times with the scanning electron microscope S3000H manufactured by Hitachi High-Tech Corporation and measured for the major axis and the minor axis. Furthermore, the average particle diameter, as used herein, refers to an arithmetic mean of particle diameters of 100 samples.

A lower limit of the average particle diameter is not particularly limited, but the average particle diameter of the (D) precipitated calcium carbonate is preferably 50 nm or more in order to prevent the polyacetal resin composition from secondarily aggregating.

In an embodiment of the present invention, the (D) precipitated calcium carbonate is incorporated in an amount of 0.1 parts by mass or more and 1.0 parts by mass or less relative to 100 parts by mass of the (A) polyacetal resin. The (D) precipitated calcium carbonate having the average particle diameter of 1 um or less incorporated in an amount smaller than the above range is not preferred since the object of an embodiment of the present invention, i.e., improvement of the friction and wear properties may be insufficiently achieved. On the other hand, the (D) precipitated calcium carbonate having the average particle diameter of 1 um or less incorporated in an amount larger than the above range is not preferred due to an increased wear amount of the material itself. Furthermore, it is also not preferred in that a molded article having an uneven surface is produced and a counterpart material on which the molded article slides may be damaged due to increased surface roughness.

The (D) precipitated calcium carbonate which may be used in an embodiment of the present invention has not been subjected to "surface treatment" that involves reacting various coupling agents or fatty acids with surfaces of particles to thereby modify the surfaces of the particles for the purpose of imparting functionality to the particles.

When the (D) precipitated calcium carbonate has been subjected to the surface treatment, it is believed that the surface treatment causes the particles to aggregate to a greater extent since an increase in bulk density is observed after the surface treatment. Therefore, the particles are preferably not subjected to the surface treatment since, when melt-kneaded with the resin, they are more poorly dispersed in the resin compared to non-surface treated particles, so that the friction and wear properties and the appearance deteriorate.

### <<(E) Fatty acid>>

The (E) fatty acid to be used in an embodiment of the present invention is a higher fatty acid having a total of 12 to 30 carbon atoms and having a structure in which a carboxyl group is attached to one end of an aliphatic hydrocarbon group. The aliphatic hydrocarbon group constituting the fatty acid may be linear or branched and may be saturated or unsaturated.

The fatty acid may be used alone or two or more thereof may be used in combination. Examples of the (E) fatty acid include lauric acid, myristic acid, pentadecylic acid, palmitic acid, margaric acid, stearic acid, nanodecanoic acid, allanic acid, behenic acid, lignoceric acid, cerotic acid, montanic acid, melissic acid, oleic acid, elaidic acid, cetoleic acid, erucic acid, brassidic acid, linoleic acid, linolenic acid, arachidonic acid, and stearolic acid.

The aliphatic hydrocarbon group in the (E) fatty acid may be substituted with a functional group such as a hydroxyl group.

In an embodiment of the present invention, the (E) fatty acid is incorporated in an amount of 0.02 parts by mass or more and 0.2 parts by mass or less relative to 100 parts by mass of the (A) polyacetal resin. The (E) fatty acid incorporated in an amount smaller than the above range is not preferred since delamination on a surface of a molded article for a sliding member is caused. On the other hand, the (E) fatty acid incorporated in an amount larger than the above range is not preferred due to the possibility of mold contamination upon molding and the possibility of delamination on a surface of a molded article for a sliding member.

### <<Other components>>

The polyacetal resin composition according to an embodiment of the present invention may include other components, as needed. For example, any one or two or more of hydroxides, inorganic salts, and carboxylates of alkali or alkali earth metals may be used as a stabilizer.

Furthermore, common additives for a thermoplastic resin, for example, one or two or more of a colorant such as a dye or a pigment, a lubricant, a releasing agent, an antistatic agent, a surfactant, an organic polymeric material, or an inorganic or organic filler in a fiber, powder, or plate form may be added as needed, as long as the object or the effect of an embodiment of the present invention is not impaired.

### <Method for producing polyacetal resin composition>

A melt-kneading device is used for producing the polyacetal resin composition according to an embodiment of the present invention. The melt-kneading device is not particularly limited, as long as it has a function of melt-kneading the polyacetal resin with the other components and preferably a venting function. Examples thereof include a single- or multi-screw continuous extrusion kneader having at least one vent hole and a co-kneader.

Known methods to be generally used for producing conventional resin compositions are used for producing the resin composition. For example, (1) a method in which all components constituting the composition are mixed together, fed into an extruder, and melt-kneaded to obtain a pelleted composition; (2) a method in which some of the components constituting the composition and the remaining components are supplied from a main feed port and a side feed port, respectively, of an extruder and melt-kneaded to obtain a pelleted composition; or (3) a method in which pellets having different compositions are firstly prepared by, for example, extrusion and mixed so as to give a predetermined composition, may be employed.

In an embodiment of the present invention, the method (1) is preferred. For example, it is preferred to mix components of the composition in a batch blender, feed the thus-mixed material into an extruder, and melt-knead it.

The melt-kneading is preferably performed in a temperature range from a temperature equal to or higher than a melting point of the polyacetal resin to 260°C. A temperature higher than 260°C is not preferred since the polymer degrades and deteriorates.

### <Slide member>

The sliding member according to an embodiment of the present invention includes a molded resin including the above-mentioned polyacetal resin composition. This sliding member is suitably used in an audio-visual field, an office automation field, a measuring device field, and a sliding part such as a carrying part due to its good performance regarding not only the friction and wear properties but also a surface property of a molded piece.

### EXAMPLES

Hereinafter, embodiments of the present invention will be specifically described with reference to Examples, which are not intended to limit the present invention.

### <Examples and Comparative Examples>

### <Preparation of polyacetal resin composition>

Components shown in Tables 1 and 2 were formulated at proportions shown in Tables 1 and 2 and melt-kneaded with a twin-screw extruder at 210°C to thereby prepare polyacetal resin compositions according to Examples and Comparative Examples in pellet form. Note that, the components shown in Tables 1 and 2 and used in Examples according to an embodiment of the present invention and Comparative Examples are as follows.

### (A) Polyacetal resin

(A-1) Polyacetal copolymer formed by copolymerizing 96.7% by mass of trioxane and 3.3% by mass of 1,3-dioxolane (Melt index as measured at 190°C and under a load of 2160 g): 9 g/10 min)

### (B) Hindered phenol antioxidant

(B-1) Irganox 245 (manufactured by BASF) Triethylene glycol-bis[3-(3-t-butyl-5-methyl-4-hydroxyphenyl)propionate]

### (C) Silicone oil

(C-1) SH200-60000CS (manufactured by Dow Toray Co., Ltd.) Dynamic viscosity at 25°C: 60,000 cSt (600 cm²/s)

### (D) Calcium carbonate

(D-1) Brilliant-1500 (manufactured by Shiraishi Kogyo Kaisha, Ltd.),
Non-surface treated Precipitated calcium carbonate having an average particle diameter of 150 nm
(D-2) Whiton P-30 (manufactured by Toyo Fine Chemical Kaisha, Ltd.)
Heavy calcium carbonate having an average particle diameter of 4.4 um
(D-3) Vigot-15 (manufactured by Shiraishi Kogyo Kaisha, Ltd.) Precipitated calcium carbonate having an average particle diameter of 150 nm and surface-treated with a fatty acid

### (E) Fatty acid

(E-1) Stearic acid (number of carbon atoms: 18)
(E-2) Oleic acid (number of carbon atoms: 18)
(E-3) Lauric acid (number of carbon atoms: 12)
(E-4) Caprylic acid (number of carbon atoms: 8)

**[Table 1]**

| Component | | Example | | | | | | | | |
|---|---|---|---|---|---|---|---|---|---|---|
| | | 1 | 2 | 3 | 4 | 5 | 6 | 7 | 8 | 9 |
| Polyacetal resin | A-1 | 100 | 100 | 100 | 100 | 100 | 100 | 100 | 100 | 100 |
| Antioxidant | B-1 | 0.3 | 0.3 | 0.3 | 0.3 | 0.3 | 0.3 | 0.3 | 0.3 | 0.3 |
| Silicone oil | C-1 | 1.5 | 1.5 | 1.5 | 0.5 | 4.5 | 1.5 | 1.5 | 1.5 | 1.5 |
| Calcium carbonate | D-1 | 0.5 | 0.5 | 0.5 | 0.5 | 0.5 | 0.2 | 0.9 | 0.5 | 0.5 |
| | D-2 | | | | | | | | | |
| | D-3 | | | | | | | | | |
| Fatty acid | E-1 | 0.1 | | | 0.1 | 0.1 | 0.1 | 0.1 | 0.03 | 0.15 |
| | E-2 | | 0.1 | | | | | | | |
| | E-3 | | | 0.1 | | | | | | |
| | E-4 | | | | | | | | | |

**[Table 2]**

| Component | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Polyacetal resin | A-1 | 100 | 100 | 100 | 100 | 100 | 100 | 100 | 100 | 100 | 100 | 100 | 100 |
| Antioxidant | B-1 | 0.3 | 0.3 | 0.3 | 0.3 | 0.3 | 0.3 | 0.3 | 0.3 | 0.3 | 0.3 | 0.3 | 0.3 |
| Silicone oil | C-1 | | 1.5 | 1.5 | 1.5 | 1.5 | 1.5 | 0.1 | 10 | 1.5 | 1.5 | 1.5 | 1.5 |
| Calcium carbonate | D-1 | 0.5 | | 0.5 | | | 0.5 | 0.5 | 0.5 | 0.05 | 1.5 | 0.5 | 0.5 |
| | D-2 | | | | 0.5 | | | | | | | | |
| | D-3 | | | | | 0.5 | | | | | | | |
| Fatty acid | E-1 | 0.1 | 0.1 | | 0.1 | 0.1 | | 0.1 | 0.1 | 0.1 | 0.1 | 0.01 | 0.3 |
| | E-2 | | | | | | | | | | | | |
| | E-3 | | | | | | | | | | | | |
| | E-4 | | | | | | 0.1 | | | | | | |

### <Evaluation>

In order to evaluate the polyacetal resin compositions according to Examples and Comparative Examples in pellet form, friction and wear properties, appearance of a molded article, and an amount of a mold deposit upon molding were evaluated. The results are shown in Tables 3 to 4.

### <<Friction and wear properties>>

Cylindrical test pieces (outer diameter: 25.6 mm, inner diameter: 20 mm, height: 15 mm) were molded using the polyacetal resin compositions according to Examples and Comparative Examples in pellet form under the conditions mentioned below. The test pieces were used to evaluate the friction and wear properties under the conditions mentioned below and measured for a coefficient of dynamic friction and a specific wear amount at the end of tests. The tests were performed under an atmosphere at 23°C and 50 RH%.

### [Evaluation method]

Test method: Suzuki friction/wear test
Tester: EFM-3-EN (manufactured by ORIENTEC CO., LTD.)
Test conditions: counterpart material: the above-mentioned cylindrical test piece made of the polyacetal resin
(Product name: DURACON (registered trademark) M90-44, manufactured by Polyplastics Co., Ltd)
Contact pressure: 0.06 MPa
Rate: 15 cm/s
Test time: 24 hours
[Condition A for molding test piece]
Molding device: FANUC ROBOSHOT α-S50iA (manufactured by FANUC
CORPORATION)
Molding condition: cylinder temperature (°C): nozzle -C1 - C2 - C3
200 - 200 - 180 - 170°C
Injection pressure: 60 (MPa)
Injection rate: 0.4 (m/min)
Mold temperature: 80 (°C)

### <<Appearance of molded article>>

Test pieces (80 mm × 80 mm × 1 mmt; side gate: 2 mm × 1 mm) were molded in the same manner using the polyacetal resin compositions according to Examples and Comparative Examples in pellet form under Condition A for molding test piece.

### [Evaluation method]

Surfaces of the resultant 10 molded pieces were visually observed. Appearance was evaluated according to the criteria mentioned below based on the number of the molded pieces on which surfaces roughness or delamination was observed.
0: No molded piece had surface roughness or delamination.
1: Two or less pieces had surface roughness or delamination.
2: Three or more pieces had surface roughness or delamination.

### <<Mold contamination upon molding>>

Test pieces for mold deposit (33 mm × 23 mm × 1 mmt) were molded using the polyacetal resin compositions according to Examples and Comparative Examples in pellet form under Condition B mentioned below.

### [Evaluation method]

After continuously molding for 5000 shots, a surface of a cavity portion on a mold was visually observed and visually determined for a deposit amount according to the following criteria:
0: No deposit was observed.
1: Slight deposit was observed.
2: Deposit was observed overall.

### [Condition B for molding test piece]

* Molding device: FANUC ROBOSHOT S-2000i 50B (manufactured FANUC CORPORATION)
* Molding condition: cylinder temperature (°C): nozzle - C1 - C2 - C3
205 215 205 185°C
Injection pressure: 40 (MPa)
Injection rate: 1.5 (m/min)
Mold temperature: 80 (°C)

Evaluation results are shown below.

**[Table 3]**

| Evaluation | | Example | | | | | | | | |
|---|---|---|---|---|---|---|---|---|---|---|
| | | 1 | 2 | 3 | 4 | 5 | 6 | 7 | 8 | 9 |
| Coefficient of dynamic friction | | 0.21 | 0.21 | 0.25 | 0.29 | 0.25 | 0.27 | 0.29 | 0.28 | 0.23 |
| Specific wear amount (x10⁻³mm³/(N·km)) | Material itself | 3.9 | 4.6 | 5.5 | 9.2 | 10.1 | 11.5 | 12.8 | 5.0 | 4.6 |
| | Counte rpart material | 3.3 | 1.8 | 3.8 | 6.9 | 5.0 | 2.3 | 10.1 | 6.9 | 3.7 |
| Appearance of molded article | | 0 | 0 | 0 | 0 | 1 | 1 | 0 | 1 | 0 |
| Mold deposit upon molding | | 0 | 0 | 0 | 0 | 1 | 1 | 0 | 1 | 0 |

**[Table 4]**

| Evaluation | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Coefficient of dynamic friction | | 0.34 | 0.34 | 0.3 | 0.33 | 0.31 | 0.3 | 0.33 | 0.33 | 0.33 | 0.33 | 0.29 | 0.29 |
| Specific wear amount (x10⁻³mm³/(N·km)) | Mate rial itself | 50.4 | 13.3 | 4.1 | 13.7 | 14.2 | 11.5 | 36.6 | 24.3 | 14.7 | 27.5 | 4.6 | 6.0 |
| | Counte rpart mate rial | 10.1 | 6.9 | 2.8 | 18.3 | 6.9 | 4.6 | 7.8 | 8.2 | 5.0 | 13.7 | 5.0 | 4.6 |
| Appearance of molded article | | 0 | 2 | 2 | 0 | 2 | 1 | 0 | 2 | 2 | 0 | 2 | 2 |
| Mold deposit upon molding | | 0 | 2 | 2 | 0 | 0 | 2 | 0 | 2 | 2 | 0 | 2 | 2 |

As shown above, it is apparent that the polyacetal resin compositions according to an embodiment of the present invention have good performance regarding not only excellent friction and wear properties but also appearance of a molded article or mold contamination upon molding.

## Claims

1. A polyacetal resin composition comprising at least: 100 parts by mass of (A) a polyacetal resin;
0.01 parts by mass or more and 1 part by mass or less of (B) a hindered phenol antioxidant;
0.3 parts by mass or more and 5 parts by mass or less of (C) a silicone oil;
0.1 parts by mass or more and 1.0 parts by mass or less of (D) calcium carbonate; and
0.02 parts by mass or more and 0.2 parts by mass or less of (E) a fatty acid,
the (D) calcium carbonate being non-surface treated precipitated calcium carbonate having an average particle diameter of 1 um or less, and
the (E) fatty acid being a fatty acid having 12 or more and 30 or less carbon atoms.

2. A sliding member comprising:
the polyacetal resin composition according to claim 1.

## Patentansprüche

1. Polyacetalharz-Zusammensetzung, die mindestens umfasst:
100 Masseteile von (A) einem Polyacetalharz;
0,01 Masseteile oder mehr und 1 Masseteil oder weniger von (B) einem gehinderten Phenol-Antioxidationsmittel;
0,3 Masseteile oder mehr und 5 Masseteile oder weniger von (C) einem Silikonöl;
0,1 Masseteile oder mehr und 1,0 Masseteile oder weniger von (D) Calciumcarbonat; und
0,02 Masseteile oder mehr und 0,2 Masseteile oder weniger von (E) einer Fettsäure,
wobei das Calciumcarbonat (D) ein nicht oberflächenbehandeltes gefälltes Calciumcarbonat mit einem durchschnittlichen Teilchendurchmesser von 1 um oder weniger ist, und
wobei die Fettsäure (E) eine Fettsäure mit 12 oder mehr und 30 oder weniger Kohlenstoffatomen ist.

2. Ein Gleitelement, umfassend:
die Polyacetalharzzusammensetzung nach Anspruch 1.

## Revendications

1. Composition de résine de polyacétal comprenant au moins :
100 parties en masse de (A) une résine de polyacétal ;
0,01 partie en masse ou plus et 1 partie en masse ou moins de (B) un antioxydant phénolique encombré ;
0,3 partie en masse ou plus et 5 parties en masse ou moins de (C) une huile siliconée ;
0,1 partie en masse ou plus et 1,0 partie en masse ou moins de (D) carbonate de calcium ; et
0,02 partie en masse ou plus et 0,2 partie en masse ou moins de (E) un acide gras,
le carbonate de calcium (D) étant un carbonate de calcium précipité non traité en surface ayant un diamètre de particule moyen de 1 µm ou moins, et
l'acide gras (E) étant un acide gras ayant 12 ou plus et 30 ou moins atomes de carbone.

2. Elément coulissant comprenant :
la composition de résine de polyacétal selon la revendication 1.
